# EUROPEAN PATENT APPLICATION

(11) **EP 1 615 382 A1**
(43) Date of publication of application: **11.01.2006**
(21) Application number: 04723760.7
(22) Date of filing: 26.03.2004
(51) Int. Cl.: H04L 12/28

(54) **RADIO INFORMATION COMMUNICATING SYSTEM**

(30) Priority: 26.03.2003 JP 2003086224
(71) Applicant: MATSUSHITA ELECTRIC INDUSTRIAL CO., LTD., Kadoma-shi, Osaka 571-8501 (JP)
(72) Inventor: MATSUMOTO, Takashi, Osaka 571-0076 (JP)
(74) Representative: Gassner, Wolfgang
(86) International application number: PCT/JP2004/004327
(87) International publication number: WO 2004/086684

(57) **Abstract**

In a radio information communicating system of the present invention, a radio terminal (2a) normally transmits a packet by CSMA/CA technique. In the packet is embedded a time in which a packet to be next transmitted will be abandoned in the radio terminal (2a) due to time-out. Here, an AP 1 monitors such information and when a packet which the radio terminal (2a) is trying to transmit is about to be abandoned in the radio terminal (2a) due to time-out, grants to the radio terminal (2a) a transmission right based on polling technique. Thus, there is provided a wireless LAN system which is controllable in such a manner that specific data such as audio data will not be abandoned within a radio terminal at the transmitting end due to time-out, without imposing a heavy control load on the whole system.

## Description

### TECHNICAL FIELD

The present invention is an invention relating to a radio information communicating system. More particularly, the present invention is an invention relating to a radio information communicating system in which one access relaying apparatus and one or more radio communication terminals constitute a local network to mutually perform radio data communication.

### BACKGROUND ART

One information communication standard for wireless LANs is IEEE 802.11. For IEEE 802.11, DCF (Distributed Coordination Function) using CSMA/CA is proposed as a standard function.

Here, under the above-mentioned DCF, a radio terminal holding a packet monitors a radio transmission line by carrier sensing and if the radio transmission line is open, performs a transmission of the packet. Conversely, if the radio transmission line is not open, the radio terminal retransmits the held packet after an interval determined by a random number based on a back-off process. Similarly, if a collision between packets occurs, the radio terminal retransmits the aforementioned packet after an interval determined by a random number (e.g., Japanese Laid-Open Patent

### DISCLOSURE OF THE INVENTION

However, while allowing for light control, the aforementioned DCF has a problem described below.

An audio packet has such characteristics that it is abandoned due to time-out if it is held in an unsent state beyond a predetermined time within a wireless LAN. Here, under the aforementioned DCF, because of the occurrence of collisions between packets and a back-off process, a delay in a packet transmission is prone to happen. Consequently, the aforementioned DCF has a problem in that there is a high possibility of abandoning the audio packet in an unsent state within the system.

As a method for solving the above-mentioned problem, PCF (Point Coodination Function) using polling by a radio base station may be conceivable. PCF is a communication method in which a radio base station sequentially grants each radio terminal a transmission right and the radio terminal having obtained the transmission right performs a transmission of a packet. Thus, the radio terminal having obtained a transmission right can periodically transmit packets of data to be transmitted. As a result, abandonment of an audio packet due to the above-mentioned time-out is less likely to occur.

Nevertheless, the aforementioned PCF has problems in that, since a radio base station must manage and control all radio terminals, there is a heavy control load, and that because polling is periodically performed even to a radio terminal generating packets in burst fashion, it is ineffective.

Therefore, an object of the present invention is to provide a wireless LAN system which can be controlled, without a heavy load on the whole system, in such a manner that specific data such as audio data will not be abandoned within a radio terminal at the transmitting end due to time-out.

To solve the aforementioned conventional problems, a radio information communicating systemof the present invention normally transmits a packet by CSMA/CA technique, and when the packet is about to be abandoned due to time-out, an AP performs polling to a radio terminal which is trying to transmit the packet.

According to the above-mentioned radio information communicating system, an AP does not need to perform polling constantly. As a result, the control load on the AP is reduced. Moreover, because a radio terminal is compulsorily granted a transmission right through polling, abandonment of a packet due to time-out is prevented.

### BRIEF DESCRIPTION OF THE DRAWINGS

FIG. 1 is a block diagram illustrating the entire constitution of a radio information communicating system of the present invention.
FIG. 2 is a diagram illustrating the constitution of a packet used in the radio information communicating system of the present invention.
FIG. 3 is a diagram illustrating the constitution of a radio terminal used in the radio information communicating system of the present invention.
FIG. 4 is a block diagram illustrating the constitution of a MAC processing section included in a radio terminal in the radio information communicating system of the present invention.
FIG. 5 is a diagram illustrating the constitution of an AP used in the radio information communicating system of the present invention.
FIG. 6 is a block diagram illustrating the constitution of a MAC processing section included in the AP in the radio information communicating system of the present invention.
FIG. 7 is a diagram illustrating an operation which a frame processing section in the MAC processing section of a radio terminal performs when various areas are embedded to a packet.
FIG. 8 is a diagram illustrating an operation of an internal CPU of a radio terminal when a packet is stored in a sending/receiving FIFO.
FIG. 9 is a diagram illustrating the process which the AP performs when receiving a packet.
FIG. 10 is a diagram illustrating an operation which a MAC processing section 102a of a radio terminal 2a performs, when the second and later packets are transmitted.

### BEST MODE FOR CARRYING OUT THE INVENTION

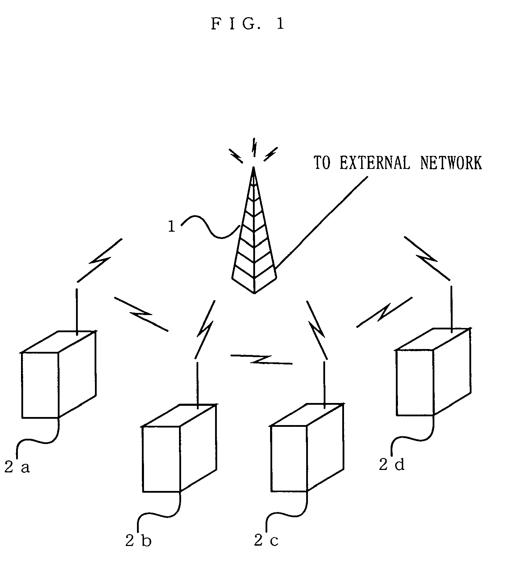

Hereinafter, a radio information communicating system according to an embodiment of the present invention will be described with reference to figures. FIG. 1 is a block diagram illustrating the entire constitution of the radio information communicating system according to an embodiment of the present invention.

The radio information communicating system shown in FIG. 1 comprises an access point (hereafter, referred to as AP) 1 and radio terminals 2a to d. This radio information communicating system is a wireless LAN system, in which radio information communications are conducted between each of the radio terminals 2a to d or the AP 1. Now, the entire overview of the radio information communicating system shown in FIG. 1 will be briefly described.

In this radio information communicating system, the AP 1 and each of the radio terminals 2a to d normally perform data communication through CSMA/CA technique. Specifically, the AP 1 and the radio terminals 2a to d perform carrier sensing for a communication path that each device is trying to use, and, if transmission is possible, transmit a packet of data to be transmitted to the AP 1 or the radio terminal 2a to d at the transmission destination. Here, if a packet of data to be transmitted by each device is a packet of audio data and the packet is about to be abandoned due to time-out, the radio terminals 2a to d according to the present embodiment are granted a transmission right from the AP 1 through polling. Thus, the radio terminals 2a to d which have been granted the transmission right switches the data communication method from CSMA/CA technique to polling technique and, without abandoning the packet due to time-out, are able to transmit the packet to the counterparting radio terminals 2a to d.

Here, in this radio communication system, when a packet of audio data held by one of the radio terminals 2a to d is about to be abandoned, in order for a transmission right to be granted to the radio terminals 2a to d holding the packet, the AP 1 needs to recognize the timing when a packet to be transmitted next to this packet would be abandoned due to time-out.

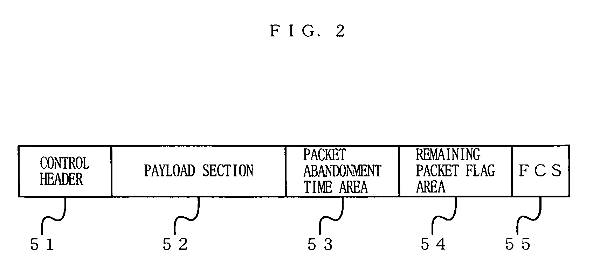

Therefore, the radio terminals 2a to d embed predetermined information in the packet of data to be transmitted and transmit the packet to the AP 1 and the radio terminals 2a to d at the transmission destination. Hereafter, the construction of the packet of data will be described with reference to figures. FIG. 2 is a diagram illustrating the construction of a packet of data according to the present embodiment.

First, a packet of data according to the present embodiment comprises a control header 51, a payload section 52, a packet abandonment time area 53, a remaining packet flag area 54, and a FCS 55. The control header 51 is a header portion containing information such as a transmission destination of this packet. The payload section 52 contains the actual data. The packet abandonment time area 53 contains information of a time (a packet abandonment time) until a packet to be transmitted next to this packet will be abandoned due to time-out. For example, the packet abandonment time is expressed by a number of 10 levels; and the packet abandonment time is decremented by one in every two seconds, and when the number becomes 0, the packet to be transmitted next to this packet is abandoned.

The remaining packet flag area 54 shows whether a packet to be transmitted next to this packet itself exists or not. More specifically, the remaining packet flag area 54 is expressed in data of 1 bit indicating, if it is 0, that a next packet does not exist, and if it is 1, that a next packet exists. An FCS (Frame Check Sequence) is a 32-bit CRC for checking whether received data is correct or not.

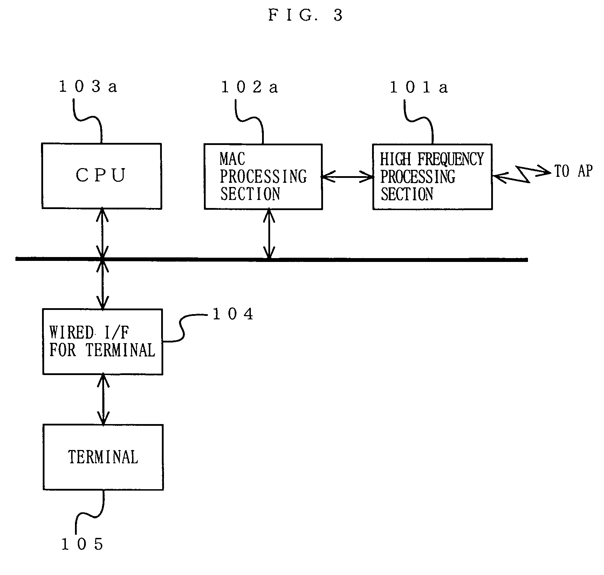

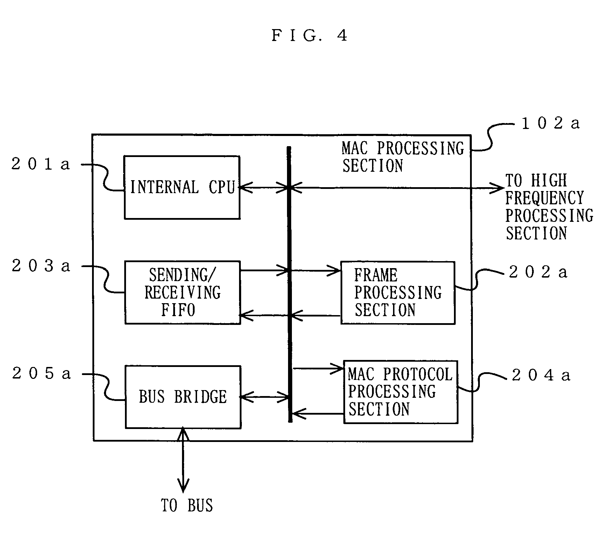

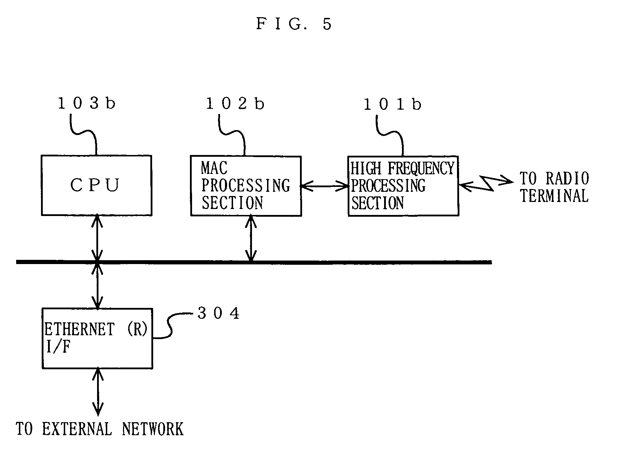

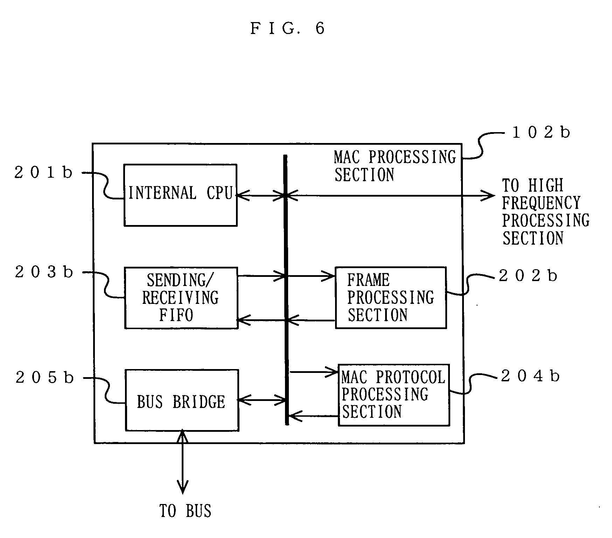

Hereafter, the detailed constitution of the radio terminals 2a to d and the AP 1 in the radio information communicating system according to the present embodiment will be described with reference to figures. FIG. 3 is a block diagram illustrating the detailed constitution of the radio terminals 2a to d according to the present embodiment. FIG. 4 is a block diagram illustrating the detailed constitution of a MAC processing section 102a in the radio terminals 2a to d. In addition, FIG. 5 is a block diagram illustrating the detailed constitution of the AP 1 according to the present embodiment. FIG. 6 is a block diagram illustrating the detailed constitution of the MAC processing section 102b in the AP 1 according to the present embodiment.

First, the radio terminals 2a to d according to the present embodiment perform data transmission/reception through mutual radio communication and comprise a high frequency processing section 101a, the MAC processing section 102a, a CPU 103a, a wired I/F 104 for a terminal, and a terminal 105.

The high frequency processing section 101a demodulates a radio signal transmitted from the radio terminals 2a to d or the AP 1 and converts the radio signal to an electric signal; in addition, the high frequency processing section 101a modulates an electric signal outputted from the MAC processing section 102a and outputs the electric signal as a radio signal.

The MAC processing section 102a, as shown in FIG. 4, comprises an internal CPU 201a, a frame processing section 202a, a sending/receiving FIFO 203a, a MAC protocol processing section 204a, and a bus bridge 205a, and switches between data communication based on CSMA/CA technique and data communication based on polling technique depending on the state of communication with the radio terminals 2a to d. The CPU 103a controls a flow of a packet within the radio terminals 2a to d. More specifically, the CPU 103a forwards a packet inputted from an external network via the wired I/F 104 for the terminal to the MAC processing section 102a, and forwards a packet outputted from the MAC processing section 102a to the wired I/F 104 for the terminal. The terminal 105 is an information terminal such as a personal computer and creates a packet to be transmitted.

Now, each constituent section of the MAC processing section 102a will be described. The bus bridge 205a connects two busses and outputs the packet outputted from the wired I/F 104a for the terminal to the frame processing section 202a. The frame processing section 202a adds the packet abandonment time area 53 and the remaining packet flag area 54 to the packet of data to be transmitted and outputs the packet to the sending/receiving FIFO 203a. The sending/receiving FIFO 203a outputs the packet to the high frequency processing section 101a, based on an instruction from the MAC protocol processing section 204a. The MAC protocol processing section 204a normally performs carrier sensing for a radio transmission line by CSMA/CA technique and, if the radio transmission line is in an open state, the MAC protocol processing section 204a instructs the sending/receiving FIFO 203a to output the packet. Additionally, if a transmission right is granted from the AP 1 through polling, the MAC protocol processing section 204a causes the sending/receiving FIFO 203a to transmit the packet held thereby. The internal CPU 201a measures time, and periodically accesses the sending/receiving FIFO 203a, and decrements the packet abandonment time area 53 of the packet stored in the sending/receiving FIFO 203a by one each. Note that the cycle with which the internal CPU 201a accesses the sending/receiving FIFO 203a and the time taken for the packet abandonment time area 53 to be decremented by one need to be matched.

Next, with reference to figures, the AP 1 will be described. FIG. 5 is a block diagram illustrating the entire constitution of the AP 1. The AP 1 and the radio terminals 2a to d have substantially the same hardware constitution, and any constituent element realized by the same hardware is denoted by the same reference numeral with the end "a" being replaced with "b".

The AP 1 transmits the packet of data inputted from the external network to the radio terminals 2a to d in the form of electric waves, and receives the electric waves transmitted from the radio terminals 2a to d and transmits the packet of data to the external network. The AP 1 comprises a high frequency processing section 101b, a MAC processing section 102b, a CPU 103b, and an Ethernet (R) I/F 304.

Here, the high frequency processing section 101b is identical to the MAC processing section 102a of the radio terminals 2a to d, and therefore, the description is omitted.

The MAC processing section 102b, as shown in FIG. 6, includes an internal CPU 201b, a frame processing section 202b, a sending/receiving FIFO 203b, a MAC protocol processing section 204b, and a bus bridge 205b, and switches data communication by CSMA/CA technique to data communication by polling technique in accordance with the state of communication with the radio terminals 2a to d. The CPU 103b controls the flow of a packet within the AP 1. More specifically, the CPU 103b forwards the packet inputted from the external network via the Ethernet (R) I/F 304 to the MAC processing section 102b, and forwards the packet outputted from the MAC processing section 102b to the Ethernet (R) I/F 304. The Ethernet (R) I/F 304 converts the format of the packet from a format appropriate for the external network to a format appropriate for the wireless LAN network, and converts the format of the packet from a format appropriate for the wireless LAN network to a format appropriate for the external network.

Here, each constituent section of the MAC processing section 102b will be described. The bus bridge 205b is identical to the bus bridge 205a of the radio terminals 2a to d, and therefore the description is omitted. The frame processing section 202b acquires the packet abandonment time area 53 and the remaining packet flag area 54 from the received packet. To the sending/receiving FIFO 203, the received packet of data is stored temporarily. The internal CPU 201b measures time, accesses the frame processing section 202b periodically, and decrements the packet abandonment time for the packet acquired by the frame processing section 202b by one each. If a next packet is not received even when the packet abandonment time of the packet received last is 1, the MAC protocol processing section 204b creates a polling packet for the purpose of granting a transmission right to the radio terminals 2a to d based on polling.

An operation of the radio information communicating system constituted as above will be described below. Each process presented in the present embodiment can be realized software-wise using a computer, or by using a dedicated hardware circuit conducting each such process.

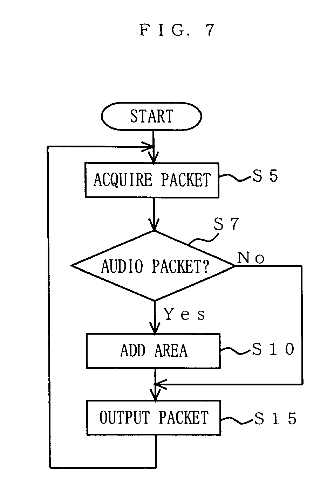

A case where the radio terminal 2a transmits data to the radio terminal 2b will be described. In the case where the radio terminal 2a transmits data to the radio terminal 2b, first, each area such as the packet abandonment time area 53 is embedded to the packet of data to transmit. Therefore, firstly, with reference to FIG. 7, an operation of the radio terminal 2a at this point oftimewillbedescribedbelow. FIG. 7 is a flowchart illustrating an operation of the frame processing section 202a of the MAC processing section 102a in the radio terminal 2a at the time of the packet transmission from the radio terminal 2a to the radio terminal 2b, when each area such as the packet abandonment time area 53 is embedded into each packet.

First, the terminal 105 outputs the packet of data to be transmitted to the wired I/F 104 for the terminal. In response, the wired I/F 104 for the terminal converts the received packet from a format appropriate for the terminal 105 to a packet format appropriate for the wireless LAN and, in accordance with an instruction from the CPU 103a, outputs the packet to the MAC processing section 102a.

The packet inputted to the MAC processing section 102a is inputted to the frame processing section 202a via the bus bridge 205a and a bus. The frame processing section 202a thereby acquires the packet (step S5).

Next, the frame processing section 202a determines whether the packet acquired is an audio packet or not (step S7). If the acquired packet is not an audio packet, the process proceeds to step S15. On the other hand, if the acquired packet is an audio packet, the process proceeds to step S10.

If the acquired packet is an audio packet, the frame processing section 202 adds the control header 51, the packet abandonment time area 53, the remaining packet flag area 54, and the FCS 55 to the acquired packet (step S10). Here, the frame processing section 202 embeds the number "10" in the packet abandonment time area 53, and embeds the number "1", indicative of an existence of a next packet, in the remaining packet flag area 54. If a next packet does not exist, the frame processing section 202 embeds the number 0 in the remaining packet flag area 540. Thereafter, the process proceeds to step S15.

At the above-mentioned step S15, the frame processing section 202 outputs the packet held thereby to the sending/receiving FIFO 203a (step S15). After this, the process returns to step S5 and the frame processing section 202 performs a process identical to the aforementioned process for the next packet. Thus, packets are successively inputted to the sending/receiving FIFO 203a from the frame processing section 202. The packets will thus be stored in the sending/receiving FIFO 203a.

Among the packets stored in the sending/receiving FIFO 203a, the MAC protocol process section 204a transmits the first packet of the data to be transmitted, through CSMA/CA technique. Specifically, the MAC protocol process section 204a performs carrier sensing for a radio transmission line which the device is going to use for a packet transmission and if the radio transmission line comes to an open state, transmits the packet based on CSMA/CA technique. In the present embodiment, because the radio terminal 2a is trying to transmit the packet to the radio terminal 2b, the radio terminal 2a monitors the usage state of the radio transmission line between the radio terminal 2a and the b.

If the MAC protocol process section 204a determines that a transmission of data is possible, the first packet of the data to be transmitted, among the packets stored in the sending/receiving FIFO 203a, is outputted to the high frequency processing section 101a, subjected to a RF process at the high frequency processing section 101a and then transmitted to the AP 1 and the radio terminal 2b. In response, the AP 1 and the radio terminal 2b receive the packet transmitted from the radio terminal 2a. The packet according to the present embodiment is transmitted to both the AP 1 and the radio terminals 2a to d at the transmission destination. This is in order to allow the AP 1 to recognize when the next packet to the packet which has been transmitted is to be abandoned.

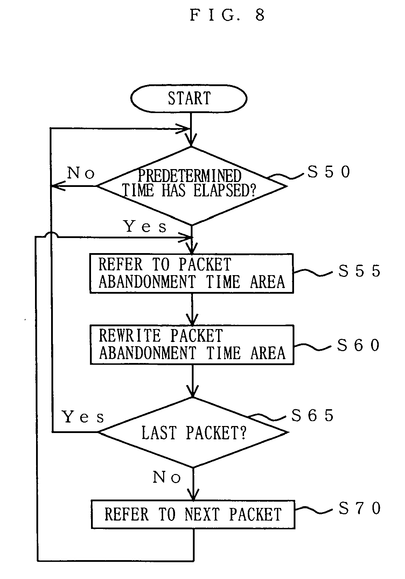

Here, the radio terminal 2a at the transmitting end must manage the time with which the packet which it is holding will be abandoned. Therefore, an operation performed by the internal CPU 201a in the radio terminal 2a when the packet is stored in the sending/receiving FIFO 203a of the radio terminal 2a will be described below with reference to figures. FIG. 8 is a flowchart illustrating the operation which the internal CPU 201a performs at this time.

Firstly, it is assumed that one or more packets are stored in the sending/receiving FIFO 203.

The internal CPU 201a measures time and accesses the sending/receiving FIFO 203a at the interval of every predetermined time. As mentioned above, the predetermined time herein is the time which takes for the packet abandonment time to be decremented by one, and in the present embodiment, it is two seconds.

Here, the internal CPU 201 determines whether the predetermined time has elapsed or not since previously accessing the sending/receiving FIFO 203 (step S50). If the predetermined time has not elapsed yet, the process returns to step S50. On the other hand, if the predetermined time has elapsed, the process proceeds to step S55.

If the predetermined time has elapsed, the internal CPU 201 refers to the packet abandonment time area 53 of the packet stored in the sending/receiving FIFO 203a (step S55). Then, the internal CPU 201 rewrites the value of the referred packet abandonment time to a value decremented by one (step S60).

Next, whether the packet currently in process is the last packet among that stored in the sending/receiving FIFO 203a or not is determined (step S65). This determination process takes place by referring to the remaining packet flag area 54. Here, if it is the last packet, since the packet abandonment time of all packets is rewritten, the process returns to step S50. On the other hand, if it is not the last packet, the process proceeds to step S70.

If it is not the last packet, the internal CPU 201a refers to a next packet within the sending/receiving FIFO 203a (step S70) . Thereafter, the process returns to step S55 and the internal CPU 201a applies processes similar to step S55 and step 60 to the packet referred at step S70.

Through the above operation, the packet abandonment time is managed in the radio terminal 2a, which is a terminal at the transmitting end.

Next, operations to be performed when the radio terminal 2b and the AP 1 receive a packet transmitted from the radio terminal 2a will be described. First, since the process performed when the radio terminal 2b receives a packet is the same as a process performed by a conventional commonly-used wireless LAN system, the description is omitted.

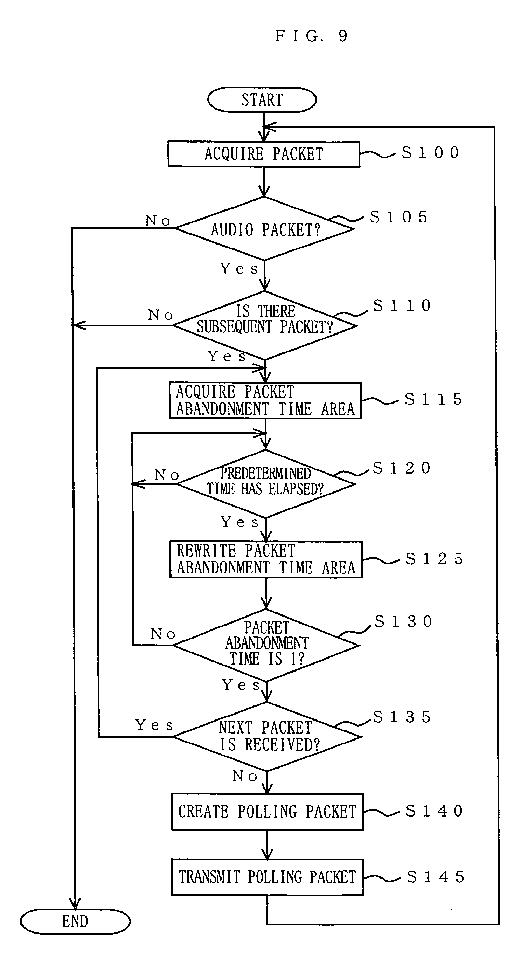

On the other hand, since the process performed when the AP 1 receives a packet greatly differs from that in a conventional wireless LAN system, the process is described with reference to figures. FIG. 9 is a block diagram illustrating an operation performed by the MAC processing section 102b of the AP 1 at this time.

First, a packet transmitted from the radio terminal 2a is received by the high frequency processing section 101b. The high frequency processing section 101b converts the received packet to a format capable of being processed at the MAC processing section 102b, and outputs the received packet to the MAC processing section 102b. In response, the frame processing section 202b of the MAC processing section 102b acquires the packet (step S100).

The frame processing section 202b which has acquired the packet refers to the acquired packet in order to determine whether the packet is an audio packet or not (step S105). Here, the determination as to whether it is an audio frame or not is conducted through determining whether the remaining packet flag area 54 and the packet abandonment time area 53 exist in the packet or not. If the acquired packet is an audio packet, the process proceeds to step S110. On the other hand, if the acquired packet is not an audio packet, the process is ended.

If the acquired packet is an audio packet, the frame processing section 202b refers to the remaining packet flag area 54 to determine whether a next packet to come transmitted exists or not (step S110). This determination is made through determining whether the number in the remaining packet flag area 54 is "1" or not. If a subsequent packet exists, the process proceeds to step S115. On the other hand, if a subsequent packet does not exist, the process is ended.

If a subsequent packet exists, the frame processing section 202b acquires the packet abandonment time area 53 contained in the acquired packet (step S115). Then, the frame processing section 202b outputs the packet to the sending/receiving FIFO 203b.

The internal CPU 201b measures time in synchronization with the internal CPU 201a of the radio terminals 2a to d, and accesses the frame processing section 202 with the same timing as the internal CPU 201a accesses the sending/receiving FIFO 203a, at the interval of every predetermined time. The predetermined time herein is the time which takes the number in the packet abandonment time area 53 to be decremented by one, and is two seconds in the present embodiment.

The internal CPU 201b determines whether the predetermined time has elapsed or not since previously accessing the frame processing section 202b (step S120). If the predetermined time has elapsed, the process proceeds to step S125. On the other hand, if the predetermined time has not yet elapsed, the process returns to step S120.

If the predetermined time has elapsed, the internal CPU 201b accesses the frame processing section 202b and rewrites the number contained in the packet abandonment time area 53 acquired by the frame processing section 202b to a number decremented by one (step S125). Next, the frame processing section 202b refers to the packet abandonment time area 53 to determine whether the packet abandonment time is "1" or not (step S130). If the packet abandonment time is "1", the process proceeds to step S135. On the other hand, if the packet abandonment time is not "1", since there is enough time left till the next packet is abandoned, the process returns to step S120.

If the packet abandonment time is "1", the internal CPU 201b determines whether the AP 1 has received a next packet to the packet currently being processed or not (step S130). If a next packet has been received, the process returns to step S115 and the MAC processing section 102b conducts the processes of step S115 to step S135 for the next packet. On the other hand, if a next packet has not been received, the process proceeds to step S140.

If a next packet has not been received, the internal CPU 201b notifies so to the MAC protocol processing section 204b. In response, the MAC protocol processing section 204b creates a polling packet for the purpose of granting a transmission right to the radio terminal 2a (step S140). The MAC protocol processing section 204b which has created the polling packet transmits the polling packet to each of the radio terminals 2a to d in the wireless LAN area via the high frequency processing section 101b (step S145). The radio terminal 2a is thereby granted a transmission right based on polling technique. Thereafter, in response to the polling packet, the packet is transmitted from the radio terminal 2a; at step S100, the packet is received.

Next, an operation at the time when the radio terminal 2a transmits a subsequent packet to the radio terminal 2b will be described. As mentioned above, the first packet is transmitted to the radio terminal 2b at the transmitted end through CSMA/CA technique.

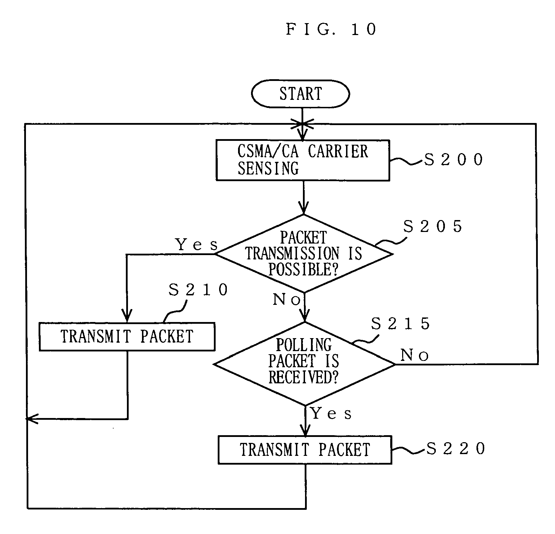

On the other hand, the second and later packets are transmitted through CSMA/CA technique in principle. When the packet is about to be abandoned due to time-out, the second and later packets are transmitted through polling technique. Now, with reference to figures, an operation performed by the MAC processing section 102a of the radio terminal 2a when the second and later packets are transmitted will be described below. FIG. 10 is a flowchart illustrating an operation performed by the MAC processing section 102a of the radio terminal 2a described above.

First, based on CSMA/CA technique, the MAC protocol processing section 204a performs carrier sensing for a radio transmission line which the device is trying to use (step S200) . Next, the MAC protocol processing section 204a determines if it is possible to transmit a packet or not, through determining whether the radio transmission line is available or not (step S205) . If it is possible to transmit a packet, the process proceeds to step S210 . On the other hand, if it is not possible to transmit a packet, the process proceeds to step S215.

If it is possible to transmit a packet, the MAC protocol processing section 204a causes the oldest packet among the packets stored in the sending/receiving FIFO 203a to be transmitted to the AP 1 and to the radio terminal 2b, via the high frequency processing section 101a (step S210). In response, the AP 1 and the radio terminal 2b receive the packet. In the AP 1 having received the packet, the process presented in the flowchart of FIG. 9 is conducted. Thereafter, the process returns to step S200 and a similar process is performed for the next packet.

On the other hand, if it is not possible to transmit the packet, the MAC protocol processing section 204a determines whether a polling packet from the AP 1 has been received or not (step S215). If a polling packet has been received, the process proceeds to step S220. On the other hand, if a polling packet has not been received, the process returns to step S200.

If a polling packet has been received, it indicates that the radio terminal 2a is granted a transmission right to transmit the packet to the radio terminal 2b. Therefore, the radio terminal 2a transmits the oldest packet among the packets stored in the sending/receiving FIFO 203a to the AP 1 and to the radio terminal 2b via the high frequency processing section 101b (step S220). In response, the AP 1 and the radio terminal 2b receive the packet. In the AP 1 having received the packet, the process shown in the flowchart of FIG. 9 is conducted. Thereafter, the process returns to step S200 and a similar process is performed for the next packet.

As aforementioned, in accordance with the radio information communicating system of the present embodiment, since an AP grants a radio terminal a transmission right based on polling when a packet is about to be abandoned, abandonment of a packet is avoided.

Furthermore, since control using polling technique only takes place when a packet is about to be abandoned and is not conducted constantly, the control load on the AP is reduced as compared to the case where control using polling technique is always performed.

In the present embodiment, packet communication between radio terminals is only described; however, this method of data communication is also applicable to the case where a packet is transmitted from a radio terminal to an AP. In this case, the function of the MAC processing section in the AP should only be the same as that of the MAC processing section in the radio terminal. The packet transmitted from a radio terminal to an AP may be a packet transmitted to an external network or may also be a packet transmitted to a radio terminal within the wireless LAN.

### INDUSTRIAL APPLICABILITY

A radio information communicating system according to the present invention has an effect of being controllable in such a manner that specific data such as audio data will not be abandoned within a radio terminal at the transmitting end due to time-out, without imposing a heavy control load on the whole system. The radio information communicating system according to the present invention is effective as a radio information communicating system or the like in which one access relaying apparatus and one or more radio communication terminals constitute a local network to mutually perform radio data communication.

## Claims

1. A radio information communicating system, as a system in which an access relaying apparatus and one or more radio communication terminals constitute a local network to mutually perform radio data communication,
wherein the radio communication terminal comprises:
information embedding means for, when successively transmitting a plurality of packets to another radio communication terminal in the local network or to the access relaying apparatus, embedding abandonment time information in a packet to be transmitted, the abandonment time information being information of a time until a packet to be transmitted next to the packet, when left unsent, is abandoned through time-out control;
carrier sense means for determining whether a radio transmission line between the other radio communication terminal or the access relaying apparatus and the radio communication terminal is available or not; and
transmission means for transmitting the packet having the abandonment time information embedded by the information embedding means into the local network in the form of radio waves when the carrier sense means determines that the radio transmission line is available, and
wherein the access relaying apparatus comprises:
reception means for receiving all packets of data transmitted by the transmission means;
reading out means for reading out abandonment time information contained in the packet received by the reception means;
determination means for determining whether or not the reception means has received a packet next to the packet received by the reception means before a time contained in the abandonment time information read out by the reading out means elapses; and
transmission right granting means for, if the determination means determines that the reception means has not received the next packet before the time contained in the abandonment time information elapses, compulsorily granting to a radio communication terminal trying to transmit the next packet a transmission right to transmit the next packet.

2. The radio information communicating system according to claim 1, wherein the information embedding means embeds the abandonment time information only when the packet to be transmitted is a specific kind of packet.

3. An access relaying apparatus for constituting a local network with one or more radio communication terminals and mutually performing radio data communication,
wherein, when successively transmitting a plurality of packets to another radio communication terminal in the local network or to the access relaying apparatus, the radio communication terminal embeds, for transmission, abandonment time information in a packet to be transmitted, the abandonment time information being information of a time until a packet to be transmitted next to the packet, when left unsent, is abandoned through time-out control, and comprises:
receptionmeans for receiving all packets of data transmitted from the radio communication terminal;
reading out means for reading out abandonment time information contained in the packet received by the reception means;
determination means for determining whether or not the reception means has received a packet next to the packet received by the reception means before a time contained in the abandonment time information read out by the reading out means elapses; and
transmission right granting means for, if the determination means determines that the reception means has not received the next packet, compulsorily granting to a radio communication terminal trying to transmit the next packet a transmission right to transmit the next packet.

4. A radio communication terminal for constituting a local network with an access relaying apparatus to perform mutual radio data communications, the radio communication terminal comprising:
information embedding means for, when successively transmitting a plurality of packets to another radio communication terminal in the local network or to the access relaying apparatus, embedding abandonment time information in a packet to be transmitted, the abandonment time information being information of a time until a packet to be transmitted next to the packet, when left unsent, is abandoned through time-out control;
carrier sense means for determining whether a radio transmission line between the other radio communication terminal or the access relaying apparatus and the radio communication terminal is available or not; and
transmission means for transmitting the packet having the abandonment time information embedded by the information embedding means into the local network in the form of radio waves when the carrier sense means that determines the radio transmission line is available.
